# EUROPÄISCHE PATENTSCHRIFT

(11) **EP 2 853 372 B1**
(45) Veröffentlichungstag und Bekanntmachung des Hinweises auf die Patenterteilung: **09.01.2019**
(21) Anmeldenummer: 14002814.3
(22) Anmeldetag: 13.08.2014
(51) Int. Cl.: B29C 45/27, B29K 105/12, B29K 105/06

(54) **Spritzgusswerkzeug sowie Verfahren zur Herstellung eines hohlen Kunststoffformteils mittels Schirmanguss**
Injection moulding tool and method for producing a hollow plastic moulded part using screen moulding
Outil de moulage par injection et procédé de fabrication d'une pièce de formage en plastique creux par entrée en voûte

(30) Priorität: 30.09.2013 DE 102013016160
(43) Veröffentlichungstag der Anmeldung: 01.04.2015
(73) Patentinhaber: WILO SE, 44263 Dortmund (DE)
(72) Erfinder: Küster, Bernd, 44379 Dortmund (DE)
(74) Vertreter: Cohausz Hannig Borkowski Wißgott

(56) Entgegenhaltungen:
- EP-A1- 0 712 708
- US-A- 4 580 757
- US-A- 5 759 647
- MOERWALD K: "EINBLICK IN DIE KONSTRUKTION VON SPRITZGUSSWERKZEUGEN", KUNSTSTOFF RUNDSCHAU, VERLAG FUR PUBLIZITAET. ISERNHAGEN HB/HANNOVER, DE, Nr. 1, 1. Januar 1962 (1962-01-01), Seiten 8-14, XP009050568,

## Beschreibung

Die vorliegende Erfindung betrifft ein Spritzgusswerkzeug und ein Verfahren zur Herstellung eines hohlen Formteils aus einem faserverstärkten Kunststoffmaterial. Das Werkzeug umfasst zumindest eine erste Werkzeughälfte, die eine Einspritzdüse aufweist, und eine zweite Werkzeughälfte, die wenigstens einen Formkern aufweist, wobei zwischen dem Formkern und der ersten Werkzeughälfte eine mit Kunststoffmaterial füllbare Formkavität ausgebildet ist, die über einen schirmförmigen Angusskanal an die Einspritzdüse anschließt.

Es ist allgemein bekannt, rotationssymetrische, insbesondere rohrförmige Kunststoffformteile unter Verwendung eines Schirmangusses spritzzugießen. Damit wird ein gleichmäßiges Füllen des gesamten Querschnitts der Formkavität erreicht, ohne dass bei dem spritzgegossenen Formteil festigkeitsmindernde Bindenähte entstehen. Die Schrift US 5,759,647 A offenbart demgegenüber eine Angussgeometrie mit zwei einzelnen, im Querschnitt kreisrunden Angusskanälen, die zunächst bogenförmig von einem zentralen Angusskanal abgehen und dann winklig abknicken und so in eine hohlzylindrische Kavität münden.

Ein Schirmanguss nach dem Stand der Technik entsteht durch einen zentral gespeisten, trichterförmigen Angusskanal. Dieser verbindet einen zentralen, koaxial zu dem herzustellenden Spritzling liegenden Einspritzpunkt mit der Formkavität. Unmittelbar vor dem Schirmanguss, d.h. am düsenseitigen Ende des die flüssige Kunststoffformmasse in den Angusskanal zuführenden Kanals, liegt ein Raumbereich, der so genannte Angusskegel, in den die Einspritzdüse das Kunststoffmaterial einspritzt. Der Angusskegel geht in den Schirmanguss über, wobei an dem Übergangsbereich die Schirmangussgeometrie einen Kegelwinkel von mehr als 135° aufweist, so dass die Kunststoffformmasse am Ende des kegelförmigen Zuführungskanals in eine anteilig radiale Richtung umgelenkt wird. Sie strömt dann schirmförmig in einem konstanten Winkel zur Formteilachse zur Formkavität. Am formkavitätsnahen Ende des Angusskanals nach dem Stand der Technik erfolgt eine erneute Umlenkung der eingespritzten Kunststoffformmasse um fast 90° derart, dass sie in axialer Richtung in die Formkavität eintritt. Bei anderen Ausführungsvarianten geht der schirmförmige Angusskanal in einem stumpfen Winkel in die Formkavität über. Die US 4,580,757 A beschreibt das Umspritzen eines Kugellagers unter Verwendung eines sphärischen Schirmangusses, wobei der Übergang von diesem zur Formkavität in einem Winkel von etwa 120° erfolgt, so dass starke Scherkräfte auf die Kunststoffformmasse wirken. Diese tritt dann fast radial nach innen in die Formkavität ein.

Nach der Herstellung des spritzgegossenen Formteils ist der Schirmanguss samt Angusskegel zu entfernen. Hierbei entsteht Abfallmaterial und es ist ferner eine Nachbearbeitung des Formteils erforderlich. Dennoch eignen sich Schirmangüsse zur Herstellung qualitativ hochwertiger Formteile mit hoher Maßhaltigkeit.

Es hat sich gezeigt, dass bei der Verwendung faserverstärkter Kunststoffe in konventionellen Schirmangussgeometrien Scherung auftritt, wodurch die Verstärkungsfasern beschädigt werden, insbesondere brechen. Ferner führen die Umlenkungen der Kunststoffformmasse beim Einspritzen zu einem Verstrecken der Polymermoleküle, wodurch sich die Eigenschaften der Kunststoffformmasse ändern. Im Übrigen führen Umlenkstellen, Stufen, Kanten, Hinterschnitte und sonstige Hindernisse innerhalb des Angusskanals stets zu Turbulenzen innerhalb der strömenden Kunststoffformmasse, wodurch keine definierte Faserorientierung erreicht wird. Bei hochqualitativen, faserverstärkten Kunststoffformteilen ist jedoch eine ganz bestimmte Faserausrichtung innerhalb des Formteils wünschenswert, denn die Faserausrichtung beeinflusst einerseits die mechanischen Festigkeitseigenschaften und andererseits die Schwindung des Kunststoffs und damit die Maßhaltigkeit des hergestellten Formteils.

Es ist daher Aufgabe der vorliegenden Erfindung, die vorgenannten Nachteile zu überwinden und eine Schirmangussgeometrie zur Herstellung hohler Kunststoffformteile bereitzustellen, die aus Sicht der in die Formkavität eingespritzten Kunststoffformmasse strömungsgünstig ist und zu einer gezielten Ausrichtung der Verstärkungsfasern führt.

Diese Aufgabe wird durch ein Spritzgusswerkzeug gemäß Anspruch 1 sowie durch ein Herstellungsverfahren gemäß Anspruch 17 gelöst. Vorteilhafte Weiterbildungen des Werkzeugs respektive des Verfahrens sind in den jeweiligen Unteransprüchen angegeben.

Erfindungsgemäß wird ein Spritzgusswerkzeug zur Herstellung eines hohlen Formteils aus einem faserverstärkten Kunststoffmaterial vorgeschlagen, das zumindest eine erste Werkzeughälfte, die eine Einspritzdüse aufweist, und eine zweite Werkzeughälfte, die wenigstens einen Formkern aufweist, umfasst, wobei zwischen dem Formkern und der ersten Werkzeughälfte eine mit dem Kunststoffmaterial füllbare Formkavität ausgebildet ist, die über einen schirmförmigen Angusskanal an die Einspritzdüse anschließt, wobei der Angusskanal einen sphärischen Bereich aufweist. Der Angusskanal bildet nach der Befüllung mit Kunststoff einen Schirmanguss aus, der von dem hergestellten Spritzling abzutrennen ist, um das gewünschte Formteil zu erhalten.

Im Gegensatz zu den trichterförmigen Angusskanälen, wie sie im Stand der Technik verwendet werden, schlägt die Erfindung folglich vor, den Angusskanal sphärisch auszubilden, so dass die Angussgeometrie und der letztendlich nach dem Spritzgießvorgang vorhandene Schirmanguss sphärisch ist in der Art einer Halbkugelschale.

Ausgehend von der Einspritzdüse wird das Kunststoffmaterial zentral in den sphärischen Bereich eingespritzt und dann bogenförmig in dem erfindungsgemäßen Angusskanal geführt, um anschließend in die Formkavität einzutreten. Dies bedeutet, dass der Angusskanal im Querschnitt zumindest abschnittsweise halbkreisförmig oder halbkreissegmentförmig ist. Hierdurch wird zwar der Fließweg innerhalb des Angusskanals vergrößert im Vergleich zu der trichterförmigen Ausführung gemäß Stand der Technik, bei der der Angusskanal im Querschnitt Y-förmig ist, jedoch bietet eine sphärische Geometrie des Angusskanals strömungsgünstige Eigenschaften, unter anderem deshalb, weil sie rotationssymmetrisch ist. Das Kunststoffmaterial wird weniger geschert, so dass die Verstärkungsfasern geringer beschädigt werden und kein Verstrecken der Makromoleküle des Kunststoffpolymers stattfindet. Ferner können sich die Verstärkungsfasern in Strömungsrichtung optimal ausrichten, so dass sie beim Eintritt in die Formkavität keine ungeordnete Struktur aufweisen. Dies führt im Weiteren zu besseren und reproduzierbaren Formteileigenschaften, wie im Folgenden noch verdeutlicht wird.

Der sphärische Bereich kann unmittelbar in die Formkavität münden, d.h. achsparallel in diese übergehen. In diesem Fall wird der sphärische Bereich durch eine volle Halbkugelschale gebildet. Weitere Umlenkungen der Formmasse, die zu Strömungsturbulenzen führen können, werden dadurch vermieden.

Alternativ kann der Angusskanal wenigstens zwei Bereiche unterschiedlicher Geometrie aufweisen. Jede Geometrie bewirkt dabei besondere Vorteile. So kann zwischen dem sphärischen Bereich und der Formkavität insbesondere zusätzlich ein konischer Bereich und/ oder ein oder zwei zylindrische Bereiche vorhanden sein. Dies wird nachfolgend noch erläutert.

Beispielsweise ist es sinnvoll, wenn der Angusskanal zwischen seinem sphärischen Bereich und der Formkavität noch einen konischen Bereich aufweist. Hierdurch kann der Durchmesser des sphärischen Bereichs reduziert werden und/ oder braucht keine volle Halbkugelschale zu bilden, so dass auch das Volumen des sphärischen Bereichs des Angusskanals verringert wird. Dadurch wird mit dem abzutrennenden Schirmanguss weniger Abfallmaterial produziert, was insbesondere bei hochwertigen, teuren Kunststoffformmassen von besonderer Bedeutung ist und zu einer wirtschaftlicheren Fertigung führt.

Vor dem Hintergrund der Abfallverringerung wird die Breite des Angusskanals, d.h. der Abstand zweier gegenüberliegender, den Angusskanal begrenzender Wände orthogonal zur Strömungsrichtung, in der Regel möglichst klein gehalten, um das Gesamtvolumen der Schirmangussgeometrie zu minimieren. Deshalb ist in der Regel die Breite der Formkavität, d.h. die Wandstärke des herzustellenden Formteils, größer als die Breite des Angusskanals, d.h. größer als die Wandstärke des sich bildenden Schirmangusses. Der Querschnitt der Anbindung der Formkavität an den Angusskanal ist also kleiner als der Querschnitt des Formteils selbst. Dies ist auch dem Wunsch geschuldet, den Schirm leichter von dem Formteil entfernen zu können.

Hierdurch bildet sich jedoch hinter dem Übergang von der Schirmangussgeometrie zur Formkavität, nachfolgend Anschnitt bezeichnet, aus Sicht der Kunststoffformmasse eine Hinterschneidung. Bei einem achsparallelen Einströmen des Kunststoffmaterials von dem Angusskanal in die Formkavität kann es dann zu einer so genannten Freistrahlbildung kommen, d.h. zu einer an der Seite des Formkerns voreilenden Strömung, die keinen oder einen nur unzureichenden Kontakt zu der Außenwand der Formkavität besitzt. Der Kontakt verbessert sich zwar mit fortschreitendem Einspritzen der Kunststoffformmasse und dem damit verbundenen Druck, der innerhalb der Formkavität aufgebaut wird, jedoch bewirkt auch dies keinen optimalen Kontakt zwischen dem Kunststoffmaterial und der Kavitätsaußenwand. Zum Teil kann dieser Effekt auch auf der Seite des Formkerns festgestellt werden.

Um den vorgenannten Effekt der Freistrahlbildung zu verhindern oder zumindest zu minimieren, kann der konische Bereich des Angusskanals unmittelbar in Formkavität münden, so dass die Strömung der Formmasse beim Eintritt in die Kavität vollumfänglich auf die Innenseite der Außenwand der Kavität gerichtet ist. Der Kontakt zwischen der Kunststoffformmasse und der Formkavitätsaußenwand kann dadurch verbessert werden. Die genannte Ausführungsvariante führt zu einem im Querschnitt glockenförmigen Schirmanguss.

Es hat sich als besonders günstig herausgestellt, wenn der konische Bereich, insbesondere die Hauptströmungsrichtung, einen Halbkegelwinkel zwischen 20° und 40°, insbesondere 20° bis 30°, vorzugsweise zwischen 22° und 23° mit der Achse des Formkerns (Angussschirmmittenachse) bildet. Hierdurch werden Kontaktverluste zur Formkavitätsaußenwand bestmöglich vermieden.

Bevorzugt weist der Angusskanal zwischen seinem sphärischen Bereich und der Formkavität, insbesondere zwischen dem sphärischen Bereich und dem konischen Bereich, einen weiteren Bereich auf, der zylindrisch ausgebildet ist. Dies hat zwei Effekte. Durch diesen zylindrischen Bereich kann zum einen der Abstand zwischen der Einspritzdüse und der Formkavität spezifisch je nach verwendeter Kunststoffformmasse festgelegt werden. Denn der zylindrische Bereich verlängert den Abstand zur Formkavität. Dies ist sinnvoll, wenn besonders hohe Temperaturunterschiede zwischen der Einspritzdüse und der Formkavität vorhanden sein müssen, was folglich eine thermische Trennung bedingt.

Wird als Kunststoffformmasse beispielsweise ein plastifizierter Thermoplast wie PEEK (Polyetheretherketon) zur Herstellung des Formteils verwendet, das bei einer Kavitätstemperatur von ca. 200°C und einer Formmassentemperatur von ca. 400°C zu verarbeiten ist, besitzt die Einspritzdüse respektive der in unmittelbarer Nähe zur Düse befindliche Bereich der ersten Werkzeughälfte entsprechend eine Temperatur über 200°C. Demgegenüber muss die Formkavität während und nach dem Spitzgießen gekühlt werden. Um eine thermische Trennung der Einspritzdüse und der Formkavität zu erreichen, kann die Länge des zylindrischen Bereichs entsprechend festgelegt werden, beispielsweise zwischen 1mm bis 10mm betragen oder 3% bis 30% des maximalen Außendurchmessers des sphärischen Bereichs des Angusskanals.

Zum anderen bietet der zylindrische Bereich eine Einlaufstrecke für das Kunststoffmaterial, in der sich die Fasern vor dem Eintritt in die Kavität in Strömungsrichtung ausrichten können, so dass diese dann hinsichtlich ihrer Orientierung in der fließenden Kunststoffformmasse bereits definiert in die Formkavität eintreten. Dies hat wiederum zur Folge, dass die Mehrheit der Fasern bereits am Anfang der Formkavität in Strömungsrichtung gut ausgerichtet sind, wodurch eine homogene Schwindung entlang der axialen Länge des Formteils erreicht wird und das Formteil dadurch maßhaltiger ist. Dies wird im Folgenden noch erläutert.

Die erste und die zweite Werkzeughälfte können im Bereich des zylindrischen Bereichs schlecht wärmeleitenden Elemente, beispielsweise Keramikplatten aufweisen, um die thermische Trennung zusätzlich zu unterstützen.

Allgemein kann durch die Integration von zylindrischen Geometriestellen bereits in einer frühen Kavitätsfüllungsphase eine gleichmäßigere Faserausrichtung erreicht werden. Andererseits kann über diese zylindrischen Elemente im Falle eines thermoplastischen Kunststoffs der Abstand zur heißen Seite des Werkzeugs (Düsenseite) bzw. zur Heißkanaldüse optimal für den jeweiligen Werkstoff im Sinne hinreichender thermischer Trennung eingestellt bzw. angepasst werden. Dadurch lässt sich der notwendige Abstand zur eigentlichen Formteilgeometrie optimieren, d.h. die Formteilschwindung wird weniger bzw. so viel wie absolut notwendig durch die heiße Seite thermisch beeinflusst. Hierdurch ergeben sich insbesondere bei der Verarbeitung von Hochtemperaturthermoplasten stabilere Verarbeitungsprozessfenster und letztlich maßhaltigere Formteile mit reproduzierbarer Qualität.

Der Angusskanal kann vor dem Übergang zur Formkavität, d.h. vor dem Anschnitt, eine Wandstärke aufweisen, die mindestens 40% der Wandstärke der Formkavität hinter dem Übergang beträgt. Die aus Sicht der strömenden Kunststoffformmasse hinter dem Anschnitt liegende Hinterschneidung beträgt damit maximal 60% der Wandstärke des Angusskanals unmittelbar vor dem Anschnitt. Durch Anbindung des Schirms mit mind. 40% Wanddickenquerschnitt in Relation zur Wanddicke des Formteils wird eine gleichmäßige und gute Druckübertragung gewährleistet. Dies hat gegenüber konventionellen gebräuchlichen Schirmangüssen mit sehr kleinem, oft nur wenige 1/10mm großen Anbindungsquerschnitten deutlich Vorteile bei der Prozessführung und der Beeinflussung von Formteilabmessungen bei Hochpräzisionsteilen durch die Nachdruckführung im Spritzgießprozess.

Durch die genannte Hinterschneidung kommt es in der Formkavität zu einem Bereich, in dem die Verstärkungsfasern beim Einströmen der Kunststoffformmasse in die Formkavität senkrecht zur Strömungsrichtung, d.h. senkrecht (radial) zur Formteilmittenachse orientiert werden. Dies wiederum führt dazu, dass die bei einem spritzgegossenen Kunststoffformteil stets vorhandene radiale Schwindung in diesem Bereich geringer ausfällt, weil eine radiale Ausrichtung der Fasern die Schwindung in radialer Richtung vermindert. Dies wiederum bewirkt, dass rohrförmige Formteile nach der Verfestigung der Kunststoffformmasse im Bereich des Eintritts der Formmasse in die Kavität, d.h. im Angussschirm nahen Bereich, einen anderen Formteildurchmesser erhalten, als im Angussschirm fernen Bereich, d.h. insbesondere am gegenüberliegenden axialen Ende. Ein Kunststoffformteil erhält dadurch eine ungewünschte trompetenartige Form.

Dies kann vermieden werden, indem die Hinterschneidung in Bezug zur Breite des Angusskanals so gering wie möglich gewählt oder vermieden wird. Dies ist jedoch nur in einem gewissen Rahmen möglich, da das herzustellende Kunststoffformteil zwangsläufig eine spezifische Wandstärke aufweisen muss und demgegenüber der Angusskanal minimal sein sollte, um die durch das Entfernen des Schirmangusses entstehende Abfallmenge gering zu halten, insbesondere in dem Falle, dass hochwertige, teure Kunststoffformmassen verwendet werden, die insbesondere nicht wiederverwendet werden können. Ein Anschnitt von einer Breite von 40% bis 60% hat sich hier als Kompromiss herausgestellt, wodurch eine radiale Ausrichtung der Verstärkungsfasern, d.h. eine Ausrichtung senkrecht zur Strömungsrichtung weitestgehend vermieden werden kann. Die genannte Breitenwahl gilt sowohl für eine Ausführungsvariante, bei der der sphärische Bereich axial bzw. achsparallel in die Formkavität übergeht, als auch für eine Ausführungsvariante mit einem konischen Bereich, bei der die Kunststoffformmasse schräg zur Formteilachse in die Kavität eintritt.

Eine besonders vorteilhafte Weiterbildung ergibt sich, wenn der Angusskanal gleichmäßig auf die Wandstärke der Formkavität erweitert wird. Dies bedeutet, dass dann keine Hinterschneidung vorliegt, d.h. der Anschnitt eine ringförmige Fläche ist, die nachher die Stirnseite des hergestellten Formteils bildet. Hierdurch wird gänzlich verhindert, dass sich die Verstärkungsfasern im anschnittsnahen Bereich in radialer Richtung ausrichten, so dass entlang der gesamten axialen Länge des herzustellenden Formteils eine gleichmäßige Schwindung bei einem Erhärten der Kunststoffformmasse vorliegt, wodurch eine besonders gute Maßhaltigkeit erreicht wird. Es wird dabei in Kauf genommen, dass sich das Volumen des Angusskanals und damit die Abfallmenge erhöhen.

Die Erweiterung kann beispielsweise in dem konischen Bereich des Angusskanals, insbesondere von seinem Beginn an erfolgen oder, sofern ein konischer Bereich bei dem erfindungsgemäßen, schirmförmigen Angusskanal nicht vorhanden ist, gegen Ende des sphärischen Bereichs erfolgen, oder auch in einer weiteren Alternative in dem zylindrischen Bereich erfolgen, der sich an den sphärischen Bereich anschließt. Schließlich ist es auch möglich, dass in zwei oder allen Bereichen eine Erweiterung der Angusskanalbreite erfolgt.

Bei dem erfindungsgemäßen Spritzgusswerkzeug kann der Formkern an seinem der Einspritzdüse gegenüberliegenden Bereich eine topfförmige, einen Freiraum bildende Ausnehmung aufweisen, die zum Schmelzefang, d.h. als Schmelzefänger dient. Diese Ausnehmung bewirkt, dass die aus der Einspritzdüse axial austretende Kunststoffformmasse sich zunächst unmittelbar vor dieser Düse in der Ausnehmung ein Reservoir bildend sammelt, wobei der Kunststoff dann ausgehend von diesem Reservoir radial in den sphärischen Formbereich des Angusskanals eintritt und bogenförmig umgeleitet wird. Dies bewirkt bei zumindest einem Teil der Verstärkungsfasern eine erste definierte Orientierung, insbesondere in Strömungsrichtung.

Darüber hinaus hat der Schmelzefänger die Wirkung, einen sich an der Einspritzdüse gegebenenfalls gebildeten Pfropfen verfestigter Formmasse aufzufangen, der sich möglicherweise nach dem letzten Spritzgießvorgang gebildet haben kann, so dass verfestigte Teile der Kunststoffformmasse nicht in den Angusskanal und damit nicht in die Formkavität gelangen können. Dies würde die Materialeigenschaften, insbesondere die mechanische Stabilität, die Schwindung und damit die Maßhaltigkeit aufgrund der lokal entstehenden Faserinhomogenität stark beeinträchtigen. Durch die Verwendung eines Schmelzfängers, d.h. der erfindungsgemäßen Ausnehmung gegenüber der Einspritzdüse, wird ein etwaiger Pfropfen aufgefangen und die Kunststoffformmasse strömt an diesem vorbei in den sphärischen Angusskanal hinein.

Die Ausnehmung im Formkern bildet somit eine Art Topf mit einem insbesondere runden Querschnitt, so dass die Herstellung besonders einfach ist. Der Querschnitt sollte in den Abmessungen mindestens der Breite, d.h. dem Durchmesser der Düsenöffnung der Einspritzdüse entsprechen, wobei vorzugsweise ein Querschnitt gewählt werden sollte, der 10% bis 30% breiter ist, als die Düsenöffnung, so dass gewährleistet ist, dass ausreichend Kunststoffformmasse an einem etwaig aufgefangenen Pfropfen vorbeifließen kann.

Zur Vermeidung von Scherung der Kunststoffformmasse und der darin enthaltenen Verstärkungsfasern ist es von Vorteil, den Übergangsbereich des Formkerns von der Ausnehmung im Formkern zum sphärischen Bereich des Angusskanals abzurunden, insbesondere stark abzurunden beispielsweise mit einem Radius, der mindestens 2/3 der Schirmwandstärke entspricht. Dabei wird auch der Einströmbereich in den sphärischen Teil des Angusskanals verbreitert, wodurch die Faserausrichtung unterstützt wird.

Vorzugsweise kann die zweite Werkzeughälfte des erfindungsgemäßen Spritzwerkzeugs einen Auswerfer aufweisen, der koaxial durch den Formkern hindurch geführt ist, wobei dessen zur Einspritzdüse gerichtetes axiales Ende den Angusskanal mit begrenzt. Dies führt dazu, dass die axiale Stirnseite des Auswerfers an der Innenseite des Schirmangusses des hergestellten Spritzlings anliegt, so dass der Auswerfer bei einer Relativbewegung zum Formkern eine Druckkraft auf den Schirmanguss ausübt, wodurch der Spritzling axial von dem Formkern herunter geschoben wird. Bei diesem Abstreifvorgang wird der Spritzling zwangsläufig mechanisch beansprucht, insbesondere aufgrund der Haftung auf dem Formkern gedehnt, wobei diese Beanspruchung bei der Verwendung eines Auswerfers, der lediglich am Schirm angreift, auf den Schirm begrenzt ist. Das hergestellte hohle Kunststoffformteil wird dadurch nicht mechanisch belastet.

Weist der Formkern eine Ausnehmung als Schmelzefänger auf, kann das zur Einspritzdüse gerichtete axiale Ende des Auswerfers die Ausnehmung bzw. den Freiraum zumindest bodenseitig begrenzen. Dies bedeutet, dass im verfestigten Zustand der Kunststoffformmasse vor dem Auswerfer ein massiver Block verfestigten Kunststoffs liegt, gegen den der Auswerfer drücken kann. Hierdurch wird die von dem Auswerfer ausgeübte Kraft besser auf den Schirmanguss übertragen und dieser dadurch beim Abstreifen des Formteils vom Formkern weniger gedehnt.

Das axiale Ende des Auswerfers kann T-förmig sein. Insbesondere kann es stirnseitig konvex ausgebildet sein, beispielsweise stirnseitig die Form eines Kugelabschnitts besitzen, der die radial innen liegende Wand des Angusskanals bildet. Hierdurch wird eine großflächige Kraftübertragung des Auswerfers zum Schirmanguss erreicht. In dieser Ausführungsvariante bildet das axiale Ende des Auswerfers quasi den vorderen Teil des Formkerns. Sofern der Formkern eine Ausnehmung zum Schmelzefang aufweist, ist diese dann in dem Auswerfer vorsehen.

Die Auswerferfunktion kann zudem auch als sog. Z-Auswerfer ausgeführt sein, um das Formteil bei der Werkzeugöffnungsbewegung sicher auf der Auswerferseite zu halten.

Des Weiteren ist es auch möglich, dass das axiale Ende des Auswerfers eine Hinterschneidung besitzt. Diese bewirkt, dass der Auswerfer den Spritzling bei der Werkzeugöffnungsbewegung sicher auf dem Formkern hält und der Spritzling nicht aufgrund starker Anhaftungskräfte in der ersten Werkzeughälfte haften bleibt. Eine Hinterschneidung kann beispielsweise dadurch erreicht werden, dass der Endabschnitt des Auswerfers im Querschnitt Z-förmig geformt ist. Dies bedeutet, dass am axialen Ende des Auswerfers an einer der Randseite ein Zahn in axialer Richtung absteht, der zu einer Seite hin derart abgeschrägt ist, dass er an seinem freien Ende breiter ist als an seiner Basis. Die Schmelzefängergeometrie ist dadurch in axialer Richtung verlängert.

Gemäß einer weiteren vorteilhaften Weiterbildung einer der vorgenannten Ausführungsvarianten des erfindungsgemäßen Spritzgusswerkzeugs kann sich an den konischen Bereich ein im Wesentlichen zylindrischer Bereich anschließen, der mit gleicher Wandstärke wie die Formkavität in diese mündet und außen eine abgerundete Schulter aufweist, wobei der Übergang vom konischen Bereich zu dem zylindrischen Bereich eine Innenrundung aufweist, deren Radius gleich oder größer dem Radius der Schulter ist. Diese Ausführungsvariante führt zu einer optimierten Außenkontur des Schirmangusses, die in einem Zwei-Komponenten-Spritzgussverfahrens ermöglicht, auf den erfindungsgemäßen Schirmanguss des hergestellten Kunststoffformteils einen weiteren Schirmanguss mit optimalen Strömungseigenschaften zu platzieren. Dies bedeutet, dass der erfindungsgemäße Schirmanguss, der in einem ersten Spritzgiessschritt hergestellt worden ist, dann die innere Begrenzungswand eines zweiten Schirmangusskanals, also quasi den Formkern in einem nachgelagerten zweiten Spritzgussschritt bildet. Aus diesem Grunde ist es erforderlich, dass die Schirmgeometrie des inneren Schirmangusses an ihrer Außenseite möglichst starke Rundungen aufweist, damit sie für die Kunststoffformmasse, die auf den inneren Schirmanguss in einem zweiten Spritzgießschritt aufgespritzt wird, strömungsoptimal ist.

Gemäß einer weiteren bevorzugten Weiterbildung des erfindungsgemäßen Spritzgusswerkzeugs kann die Einspritzdüse eine verschließbare Düsenöffnung aufweisen, die direkt in den sphärischen Bereich des Angusskanals mündet. Hierdurch wird der Angusskegel, der bei konventionellen Schirmangüssen stets vorhanden ist und zu Abfallmaterial führt, vermieden. Das Verschließen der Düsenöffnung kann beispielsweise mittels einer Düsennadel erfolgen, die im geschlossenen Zustand den sphärischen Bereich des Angusskanals mit begrenzt.

Erfindungsgemäß wird des Weiteren ein Verfahren zur Herstellung eines hohlen Kunststoffformteils aus einem Kunststoffmaterial vorgeschlagen, das mittels einer Einspritzdüse über einen schirmförmigen Angusskanal zur Ausbildung eines Schirmangusses in eine Formkavität eingespritzt wird, wobei das Kunststoffmaterial zunächst durch einen sphärischen Bereich des Angusskanals strömt und anschließend in die Formkavität eintritt. Dies kann unmittelbar oder mittelbar geschehen.

Wie bereits zuvor ausgeführt, wird dadurch eine Scherung des Kunststoffmaterials, d.h. eine Verstreckung der Polymermoleküle einerseits sowie eine Beschädigung, insbesondere ein Brechen der Verstärkungsfasern andererseits maximal verringert. Ferner sorgt der sphärische Bereich aufgrund fehlender winkliger Umlenkungen der strömenden Kunststoffformmasse zu einer verbesserten Ausrichtung der Verstärkungsfasern.

Vorzugsweise fließt das Kunststoffmaterial nach dem sphärischen Bereich durch zumindest einen weiteren Bereich, beispielsweise einen konischen Bereich des Angusskanals in die Formkavität. Letzteres bedeutet, dass der Kunststoff schräg in die Kavität einströmt, wodurch eine Freistrahlbildung verhindert wird, und der Kontakt des Kunststoffmaterials mit der Formkavitätsaußenwand verbessert wird.

In einer vorteilhaften Weiterbildung fließt das Kunststoffmaterial nach dem sphärischen Bereich durch einen zylindrischen Bereich und erst danach durch einen konischen Bereich des Angusskanals in die Formkavität. Durch den zylindrischen Bereich, dessen axiale Länge frei festgelegt werden kann, kann der Abstand zwischen der Einspritzdüse und der Formkavität vorgegeben werden, wodurch eine thermische Trennung des Bereichs der Einspritzdüse und der Formkavität, die unterschiedliche Temperaturen besitzen, erreicht wird. Ferner dient der zylindrische Bereich zur Ausbildung einer Einlaufstrecke für die Formkavität, in der sich die Verstärkungsfasern bereits weitgehend in Strömungsrichtung ausrichten können.

Schließlich kann zum Auswerfen des hergestellten Formteils nach seinem Erhärten ein Auswerfer koaxial zum Formkern bewegt werden. Dieser kann direkt gegen den gefüllten Angusskanal, d.h. gegen den Schirmanguss, oder gegen eine mit Kunststoff gefüllte, gegenüber der Einspritzdüse liegende Ausnehmung im Formkern, drücken, und das Formteil von dem Formkern in axialer Richtung herunter schieben. Hierdurch wird verhindert, dass das hergestellte Formteil beim Auswerfen aus der Spritzgussmaschine mechanisch beansprucht, insbesondere axial gedehnt wird und dadurch gegebenenfalls verformt wird.

Die Kunststoffformmasse respektive das Kunststoffmaterial kann erfindungsgemäß sowohl ein Thermoplast als auch ein Duroplast sein. Im ersten Fall wird heiße Kunststoffschmelze von der Einspritzdüse in den Angusskanal und die Formkavität eingespritzt, wobei die Formkavität anschließend gekühlt werden muss. Im Falle eines Duroplasts muss die Formkavität dagegen erwärmt werden, um die Polymerisation, d.h. das Erhärten des Kunststoffformteils herbeizuführen.

Als Verstärkungsfasem können beispielsweise Glasfasern, Kohlefasern, Aramidfasern oder Metallfasern verwendet werden.

Das erfindungsgemäße Verfahren eignet sich zur Herstellung beliebiger hohler, insbesondere rotationssymmetrische Formteile. So können beispielsweise Gleitlager aus Kunststoff für Kreiselpumpen, Spaltrohre oder Spalttöpfe für Nassläuferpumpen oder auch komplexe Formteile mit einem zylindrischen Anschnitt hergestellt werden. Im Falle von mehrkomponentigen Lagerungseinheiten, kann die strömungsgünstige Gestaltung der ersten Angussgeometrie für die erste Materialphase und ihrer Übergänge zum eigentlichen Formteil für die Schaffung einer strömungsgünstigen zweiten Angussgeometrie für eine zweite Materialphase genutzt werden. Letztendlich ist dies jedoch auch bei anderen hohlen Formteilen möglich.

So kann das erfindungsgemäße Verfahren auch dadurch vorteilhaft weitergebildet werden, dass auf den Schirmanguss, der aus der ersten Materialkomponente besteht, ein weiteres Kunststoffmaterial zur Ausbildung eines weiteren Schirmangusses aufgespritzt wird ("Schirm-auf-Schirm"-Spritzgiesen).

Weitere Vorteile und Merkmale der Erfindung werden anhand der nachfolgenden Ausführungsbeispiele und der beigefügten Figuren näher beschrieben.

Es zeigen:
- Figur 1:: Erfindungsgemäßes Spritzgusswerkzeug im geschlossenen Zustand vor dem Einspritzvorgang
- Figur 2:: Spritzgusswerkzeug nach Figur 1 mit geöffneter Düsennadel
- Figur 3:: Spritzgusswerkzeug nach Figur 1 mit geöffneter Düsennadel und ausgebildetem Spritzling
- Figur 4:: Spritzgusswerkzeug nach Figur 1 mit geschlossener Düsennadel und ausgebildetem Spritzling
- Figur 5:: Seitenansicht des hergestellten Rohformteils
- Figur 6:: perspektivische Ansicht des hergestellten Rohformteils
- Figur 7:: Axialschnitt durch das Rohformteil
- Figur 8:: Axialschnitt durch das Rohformteil mit Bemaßungszeichen
- Figur 9:: Konizitätsangabe zum Rohformteil
- Figur 10:: Axialschnitt einer zweiten Ausführungsvariante eines hergestellten Rohformteils
- Figur 11:: perspektivische Ansicht der zweiten Ausführungsvariante des Rohformteils
- Figur 12:: Auswerfer mit Z-Geometrie und Rohformteil
- Figur 13:: Auswerfer mit Z-Geometrie, Rohformteil und einliegendem Formkern
- Figur 14:: Erfindungsgemäßes Spritzgusswerkzeug mit Z-Auswerfer im geschlossenen Zustand vor dem Einspritzvorgang
- Figur 15:: Spritzgusswerkzeug nach Figur 14 im geschlossenen Zustand mit ausgebildetem Spritzling
- Figur 16:: Spritzgusswerkzeug nach Figur 14 im geöffneten Zustand
- Figur 17:: Spritzgusswerkzeug nach Figur 14 im geöffneten Zustand und entformtem Spritzling
- Figur 18:: Spritzgusswerkzeug nach Figur 14 im geöffneten Zustand und entferntem Spritzling
- Figur 19:: Mittels Schirm-auf-Schirm Spritzguss hergestellte Rohform einer Lagereinheit
- Figur 20:: Lagereinheit mit entfernten Schirmangüssen

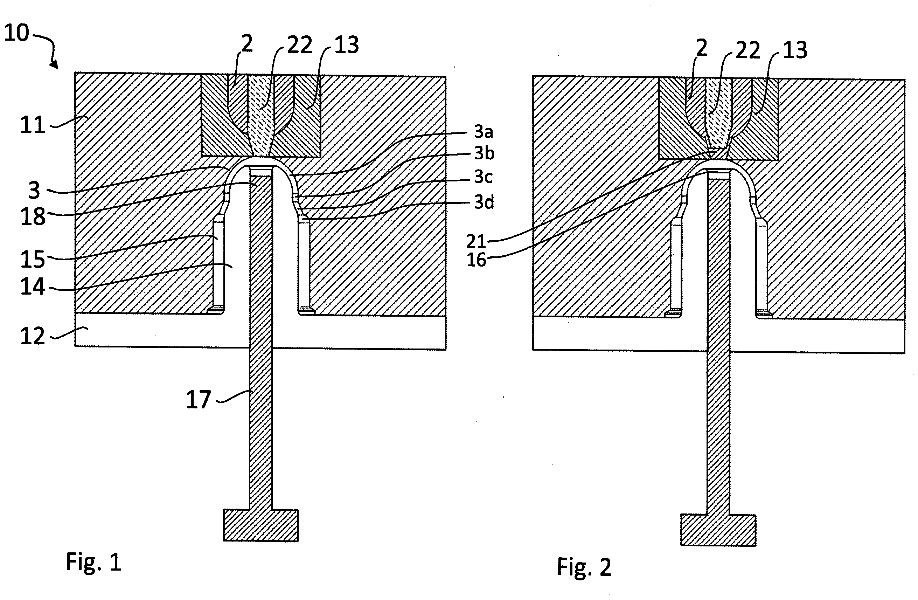

Figuren 1 bis 4 zeigen ein Spritzgusswerkzeug 10 zur Herstellung eines hohlen Formteils, das eine erste Werkzeughälfte 11 und eine zweite Werkzeughälfte 12 umfasst. Die erste Werkzeughälfte 11 weist eine Einspritzeinheit mit einer Einspritzdüse 13 und einer eine Öffnung 21 verschließbaren Düsennadel 22 auf. Die Düsennadel 22 erstreckt sich durch ein Reservoir eines plastifizierten Kunststoffmaterials 2. Die zweite Werkzeughälfte 12 umfasst einen Formkern 14, der einstückig mit einer Werkzeugplatte ausgebildet ist und der sich im geschlossenen Zustand des Spritzgusswerkzeugs 10 in die erste Werkzeughälfte 11 koaxial zur Einspritzdüse 13 hinein erstreckt. Erste und zweite Werkzeughälfte sind relativ zueinander koaxial beweglich. Zwischen dem Formkern 14 und der ersten Werkzeughälfte 11 ist eine mit dem Kunststoffmaterial 2 füllbare, rotationssymmetrische Formkavität 15 in Gestalt eines Ringraumes ausgebildet, die an einem Ende über einen schirmförmigen Angusskanal 3 an die Einspritzdüse 13 anschließt. Der Angusskanal 3 bildet nach der Befüllung mit Kunststoff 2 einen Schirmanguss 4 aus, der später von dem hergestellten Spritzling 1a abzutrennen ist, um das gewünschte Formteil 1 zu erhalten.

Das durch den in den Figuren 1 bis 4 dargestellten Herstellungsprozess herzustellende Formteil 1 ist ein Kunststoffgleitlager für eine Pumpe, insbesondere eine Kreiselpumpe in Nassläuferbauweise. Das Kunststoffmaterial ist ein Thermoplast, beispielsweise PEEK, PPS (Polyphenylensulfid) oder PEI (Polyetherimid), mit Glas- oder Kohlefasern verstärkt.

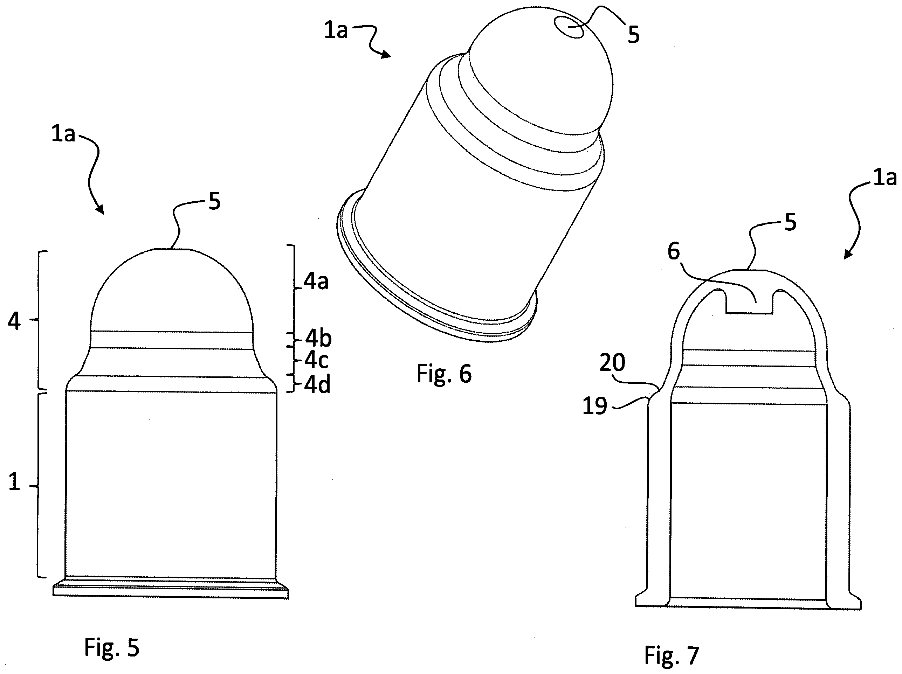

Der Angusskanal 3 ist rotationssymmetrisch und besitzt in axialer Richtung betrachtet mehrere Bereiche 3a, 3b, 3c, 3d unterschiedlicher Geometrie, auf die nachfolgend im Einzelnen unter Bezug auf die Figuren 5 bis 7 eingegangen wird.

Figur 1 zeigt das Spritzgusswerkzeug 10 im geschlossenen Zustand. Das heißt, die zweite Werkzeughälfte 12 ist mit dem Formkern 14 in die erste Werkzeughälfte 11 hineingefahren und bildet zwischen Formkern 14 und der ersten Werkzeughälfte 11 die Formkavität 15 aus. Die Öffnung 21 der Einspritzdüse 13 mündet direkt in den sphärischen Bereich 3a des Angusskanals 3. Die Düsennadel 22 der Einspritzdüse 13 verschließt die Öffnung 21.
Figur 2 zeigt das Spritzgusswerkzeug mit geöffneter Einspritzdüse 13. Die Düsennadel 22 ist von ihrem Dichtsitz in der Öffnung 21 abgehoben, so dass die Öffnung 21 freigegeben wird und Kunststoffformmasse 2 in den Angusskanal 3 und anschließend in die Formkavität 15 eintreten kann. Die Formkavität 15 füllt sich damit ausgehend von dem zentralen Anspritzpunkt an der Öffnung 21 zunehmend in axialer Richtung.

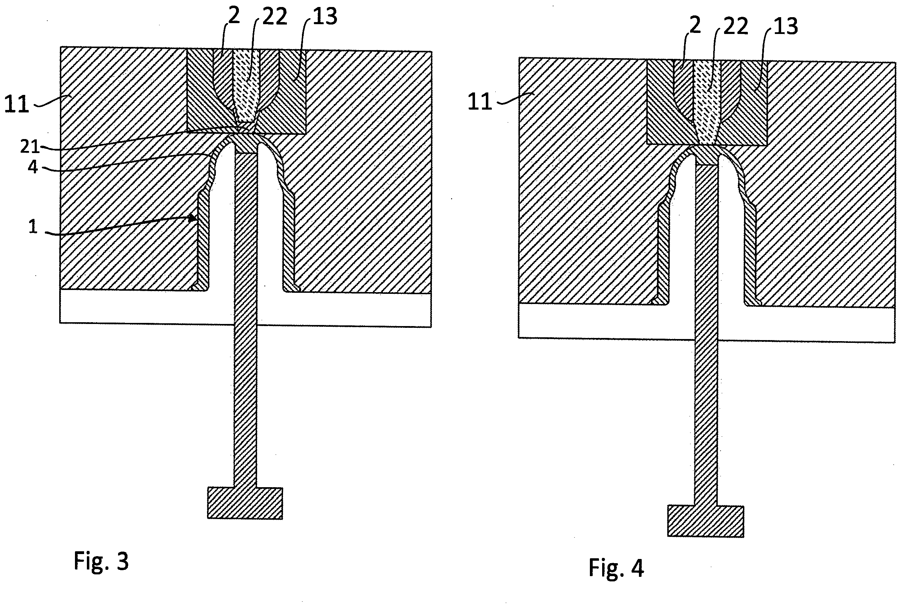

In Figur 3 ist die Einspritzdüse 13 noch immer geöffnet. Die Formkavität 15 ist nun vollständig mit Formmasse 2 gefüllt und beherbergt einen Spritzling, der eine Rohform 1a des herzustellenden Formteils 1 darstellt. Die Rohform 1a umfasst das gewünschte Formteil 1 und einen den Angusskanal 3 ausfüllenden Schirmanguss 4.
In Figur 4 ist die Einspritzdüse 13 wieder geschlossen, und die Düsennadel 22 begrenzt den Angusskanal 3 unter Ausbildung einer Düsenanlagefläche 5 am Schirmanguss 4 mit (siehe Figuren 5-7). Die Düsenanlagefläche 5 bildet somit den zentralen Anspritzpunkt für den Spritzling 1a. Dies ist insbesondere für Mehrkavitätenwerkzeuge vorteilhaft, wodurch kalte Unterverteiler, die später zu Abfallmaterial führen, oder heiße Schmelzeverteiler (Heißkanalbalken etc.) vermieden werden können. Die Anlagefläche 5 kann zudem dem jeweiligen Düsenquerschnitt angepasst werden.
Der Angusskanal 3 umfasst in den Figuren 1 bis 4 vier Bereiche 3a, 3b, 3c, 3d, die axiale Abschnitte bilden. Der erste Bereich 3a ist sphärisch ausgebildet. Er entspricht der Form einer vollständigen Halbkugelschale und verteilt den Kunststoff von dem zentralen Anspritzpunkt 5 gleichmäßig schirmartig zunächst radial und dann mit zunehmendem axialen Richtungsvektor bogenförmig zur Formkavität 15. An den ersten Bereich 3a schließt sich in Fließrichtung ein zweiter Bereich 3b an, der zylindrisch ausgebildet ist, d.h. einen Ringraum konstanten Durchmessers bildet. An den zweiten Bereich 3b schließt sich in Fließrichtung ein dritter Bereich 3c an, der konisch ausgebildet ist, d.h. einen Ringraum mit steigendem Durchmesser bildet. Schließlich schließt sich an den dritten Bereich 3c in Fließrichtung ein vierter Bereich 3d an, der ebenfalls zylindrisch ausgebildet ist und vollumfänglich in die Formkavität 15 übergeht.

Wie insbesondere Figur 2 verdeutlicht, wird erfindungsgemäß ausgehend von der Einspritzdüse 13 das Kunststoffmaterial 2 zentral in axialer Richtung in den sphärischen Bereich 3a eingespritzt und dann bogenförmig in dem erfindungsgemäßen Angusskanal 3 geführt, um anschließend in die Formkavität 15 einzutreten. Der sphärische Bereich 3a hat somit die Aufgabe, die in axialer Richtung und von einem zentralen Punkt eingespritzte Formmasse 2 bogenförmig umzulenken und gleichzeitig auf einen ringförmigen Angusskanal zu verteilen. Die sphärische Geometrie des Angusskanals 3 bietet besonders strömungsgünstige Eigenschaften für die Kunststoffformmasse 2, weil das Kunststoffmaterial 2 weniger geschert wird, so dass die Verstärkungsfasern und etwaige Füllstoffe, wie beispielsweise Glasfasern und/ oder Kohlefasern, geringer beschädigt werden und kein Verstrecken der Makromoleküle des Kunststoffpolymers 2 stattfindet. Die Verstärkungsfasern richten sich während der Durchströmung in dem sphärischen Angusskanal 3 in Strömungsrichtung aus, so dass sie beim Eintritt in die Formkavität 15 keine ungeordnete Struktur mehr aufweisen. Dies führt im Weiteren zu besseren, homogenen und reproduzierbaren Formteileigenschaften.

Durch den ersten zylindrischen Bereich 3b wird der Abstand zwischen der heißen Einspritzdüse 13 und der zu kühlenden Formkavität 15 vergrößert, so dass eine bessere thermische Trennung dieser beiden Komponenten erreicht wird. Des Weiteren bildet der zylindrische Bereich 3b eine Einlaufstrecke für das Kunststoffmaterial 2, in der sich die Fasern noch besser in Strömungsrichtung ausrichten können, weil die Strömung hier nicht die Richtung ändert.

Durch die Verwendung des konischen Bereichs 3c wird der Durchmesser des am Ende des sphärischen Bereichs 3a, bzw. am Ende des zylindrischen Bereichs 3b vorhandenen Ringraumes auf einen Ringraum größeren Durchmessers erweitert, insbesondere in etwa auf den Durchmesser des Ringraumes, den die Formkavität besitzt. Dies bedeutet, dass der Ringraum am Ende des konischen Bereichs 3c größer ist als der Ringraum am Ende des sphärischen Bereichs 3a. Hierdurch wird erreicht, dass auch das Volumen des sphärischen Bereichs 3a des Angusskanals 3 kleiner ist im Vergleich zu dem Volumen eines sphärischen Bereichs, dessen Ende einen Ringraum gleichen Durchmessers wie die Formkavität 15 besitzt. Dadurch wird mit dem abzutrennenden Schirmanguss 4 weniger Abfallmaterial produziert, was insbesondere bei hochwertigen, teuren Kunststoffformmassen von besonderer Bedeutung ist und zu einer wirtschaftlicheren Fertigung führt.

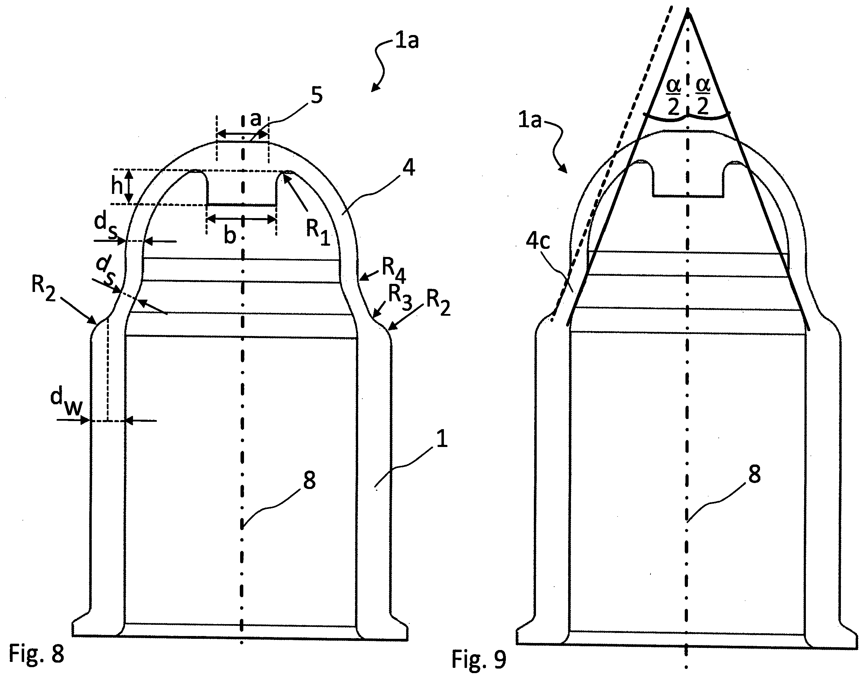

An den konischen Beriech 3c schließt sich der weitere, vergleichsweise kurze zylindrische Bereich 3a an. Dieser mündet mit gleicher Wandstärke wie die Formkavität 15 in diese hinein. Der Anschnitt der Formkavität 15 entspricht damit der gesamten Stirnfläche des herzustellenden Formteils 1. Aufgrund des konischen Bereichs 3c strömt der Kunststoff in einem Winkel α/2 (siehe Figur 9) zur Formkernachse 8 in den zylindrischen Bereich 3d hinein. Dies verhindert das bekannte Phänomen der sogenannten Freistrahlbildung, d.h. ein Voreilen des Kunststoffs 2 am Formkern 14, und bewirkt einen guten Kontakt der Formmasse 2 mit der Kavitätsaußenwand. Die Breite des konischen Bereichs 3c, d.h. der Abstand zweier gegenüberliegender, den Angusskanal im konischen Bereich begrenzender Wände orthogonal zur Strömungsrichtung, ist geringer als die Breite des zylindrischen Bereichs 3d, so dass hinter dem Eintritt der Formmasse in den zylindrischen Bereich 3d eine Hinterschneidung vorliegt und der zylindrische Bereich 3d dann stufenfrei in die Formkavität 15 übergehen kann.

Die Figuren 5 bis 9 zeigen den aus dem Werkzeug 1 entnommenen Spritzling, d.h. das Rohformteil 1a bestehend aus dem herzustellenden Formteil 1 und dem noch zu entfernenden Schirmanguss 4. Dieser ist in vier geometrisch unterschiedliche Axialabschnitte 4a, 4b, 4c, 4d eingeteilt, siehe insbesondere Figuren 5 und 8. Figur 5 zeigt eine Seitenansicht des Rohformteils 1a, Figur 6 eine perspektivische Ansicht und Figuren 7 bis 9 jeweils einen axialen Querschnitt.

Der erste Axialabschnitt 4a ist halbkugelschalenförmig und wird von dem sphärischen Bereich 3a des Angusskanals 3 ausgebildet. Der zweite Axialabschnitt 4b ist hohlzylinderförmig und wird von dem zylindrischen Bereich 3b des Angusskanals 3 ausgebildet. Der dritte Axialabschnitt 4c ist trichterabschnittförmig und wird von dem konischen Bereich 3c des Angusskanals 3 ausgebildet. Schließlich ist der vierte Axialabschnitt 4d ebenfalls hohlzylinderförmig und wird von dem zweiten zylindrischen Bereich des Angusskanals 3 ausgebildet.

Wie Figur 8 zu erkennen gibt, ist die Wandstärke d_{S} des Schirmangusses 4 bei den ersten drei Axialabschnitten 4a, 4b, 4c identisch. Sie ist jedoch kleiner als die Wandstärke d_{W} des Formteils 1, wodurch die Abfallmenge verringert wird. Die Wanddicke des vierten Axialabschnitts 4d ist größer als bei den übrigen Axialabschnitten 4a, 4b, 4c und entspricht der Wandstärke d_{W} des Formteils 1.

Der vierte Axialabschnitt 4d weist außen eine abgerundete Schulter 19 auf (siehe Figur 7). Ferner ist der Übergang vom konischen Bereich 4c zu dem zylindrischen Bereich 4d durch eine Innenrundung 20 gebildet. Diese Ausführungsvariante gemäß Figuren 5 bis 9 führt zu einer optimierten Außenkontur des Schirmangusses 4, welche in einem Zwei-Komponenten-Spritzgussverfahrens ermöglicht, auf den erfindungsgemäßen Schirmanguss 4 des Spritzlings einen weiteren Schirmanguss mit optimalen Strömungseigenschaften zu platzieren.

Wie die Querschnittsdarstellungen in den Figuren 7 bis 9 zeigen, weist der Schirmanguss 4 unmittelbar vor dem zentralen Anspritzpunkt 5 einen Stumpf 6 aus Kunststoffvollmaterial auf. Unter Bezugnahme auf die Form des Angusskanals 3 in den Figuren 1 und 2 entsteht dieser Stumpf 6 dadurch, dass der Formkern 14 an seinem der Einspritzdüse 13 gegenüberstehenden Bereich eine topfförmige Ausnehmung 16 aufweist (siehe Figur 2), die zum Auffangen von Schmelze, d.h. als Schmelzefänger dient. Die Ausnehmung 16 bewirkt, dass die aus der Einspritzdüse 13 axial austretende Kunststoffformmasse 2 sich zunächst unmittelbar vor dieser Düse 13 in der Ausnehmung 16 ein Reservoir bildend sammelt, wobei der Kunststoff 2 dann ausgehend von diesem Reservoir radial in den sphärischen Formbereich 3a des Angusskanals 3 eintritt und bogenförmig um 90° umgelenkt wird. Dies bewirkt bei zumindest einem Teil der Verstärkungsfasern eine erste definierte Orientierung, insbesondere eine Ausrichtung in Strömungsrichtung.

Darüber hinaus hat der Schmelzefänger die Wirkung, einen sich möglicherweise aus dem letzten Einspritzzyklus an der Einspritzdüse 13 gebildeten Pfropfen "kalter Schmelze", d.h. verfestigter Formmasse aufzufangen, so dass dieser nicht den Angusskanal 3 verstopft.

Die Ausnehmung 16 im Formkern 14 bildet einen Topf mit einem vorzugsweise runden Querschnitt. Anhand von Figur 8 wird deutlich, dass der Durchmesser b der Ausnehmung 16 mindestens der Breite a, d.h. dem Durchmesser der Düsenöffnung 21 entsprechen. Der Durchmesser b der Ausnehmung 16 beträgt beispielsweise das 1,4-fache bis 1,5-fache des Durchmessers a der Düsenöffnung 21. Die Tiefe h der Ausnehmung 16 beträgt bevorzugt zwischen 40% und 50% des Durchmessers b der Ausnehmung 16. Dies gewährleistet, dass ausreichend Kunststoffformmasse 2 an einem möglicherweise aufgefangenen Pfropfen vorbeifließen kann.

Zur weiteren Vermeidung von Scherung der Kunststoffformmasse 2 und der darin enthaltenen Verstärkungsfasern ist der Übergangsbereich des Formkerns 14 von der Ausnehmung 16 zum sphärischen Bereich 3a des Angusskanals 3 hin mit einem Radius R₁ abgerundet (siehe Figur 8). Dieser Radius R₁ beträgt bevorzugt 2/3 der Schirmwandstärke d_{S} bzw. der Breite des Angusskanals 3. Die Schmelze kann dann scherungsfrei in den sphärischen Bereich 3a einströmen und kalte Schmelzepfropfen werden wirksam in der zylindrischen Ausnehmung 16 zurückgehalten.

Die Angussgeometrie des Angusskanals 3 ist an ihrer zentralen Stirnseite zur Schaffung der Anlagefläche 5 für die Heißkanaldüse 13 bzw. für die Düsennadel 22 abgeflacht. Dies ist in Figur 8 gut erkennbar. An dieser Stirnseite bildet die Anlagefläche 5 ein Plateau.

Wie aus Figur 8 weiter ersichtlich ist, beträgt die Wandstärke d_{S} des Schirmangusses 4 in den oberen drei Axialabschnitten 4a, 4b, 4c bzw. die Breite des Angusskanals 3 in den oberen drei Bereichen 3a, 3b, 3c 40% bis 50% der Wandstärke d_{W} des herzustellenden Formteils 1. Die Wandstärke d_{S} des vierten Axialabschnitts 4d bzw. die Breite des vierten Angusskanalbereichs 3d entspricht dagegen direkt der Wandstärke d_{W} des herzustellenden Formteils 1. Die Schulter 19 des vierten Axialabschnitts 4d besitzt dann einen Radius R₂, der vorzugsweise der Hälfte der Formteilwandstärke d_{W} entspricht. Zur Ausbildung der Schulter 19 besitzt der Angusskanal 3 eine korrespondierende Innenrundung im zweiten zylindrischen Bereich 3d im ersten Werkzeugteil 11.

Figur 8 zeigt weitere Radien R₃ und R₄. Mit R₃ ist der Innenradius der Außengeometrie des Schirmangusses 4 im Übergang des konischen Axialabschnitts 4c zum zweiten zylindrischen Axialabschnitt 4d bezeichnet. Mit R₄ ist der Innenradius der Außengeometrie des Schirmangusses 4 im Übergang des ersten zylindrischen Axialabschnitt 4b zum konischen Axialabschnitt 4c bezeichnet. Beide Radien entsprechen bevorzugt dem einfachen bis zweifachen Schulterradius R₂, d.h. 50% bis 100% der Formteilwandstärke d_{W}.

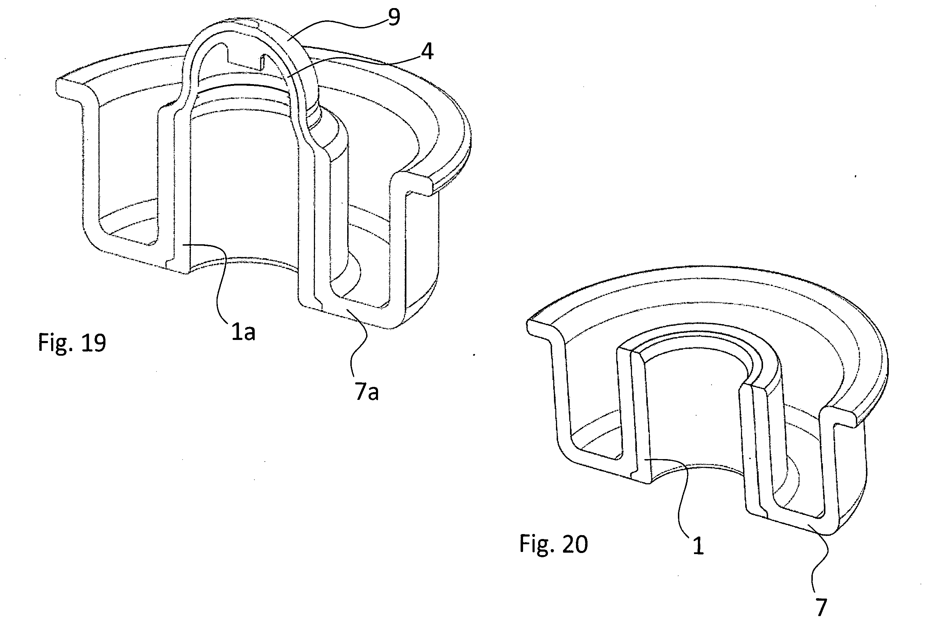

Die Angussschirmgeometrie, wie in Figur 8 gezeigt, ist strömungstechnisch durch die Verrundungen/Radien so optimiert, dass eine oder mehrere weitere Kunststoffkomponenten strömungsgünstig, also mit wenig Scherkräften und optimaler Faserorientierung um den Schirmanguss 4 des Rohformteils 1a herum gespritzt werden kann/ können (siehe Figuren 19, 20).

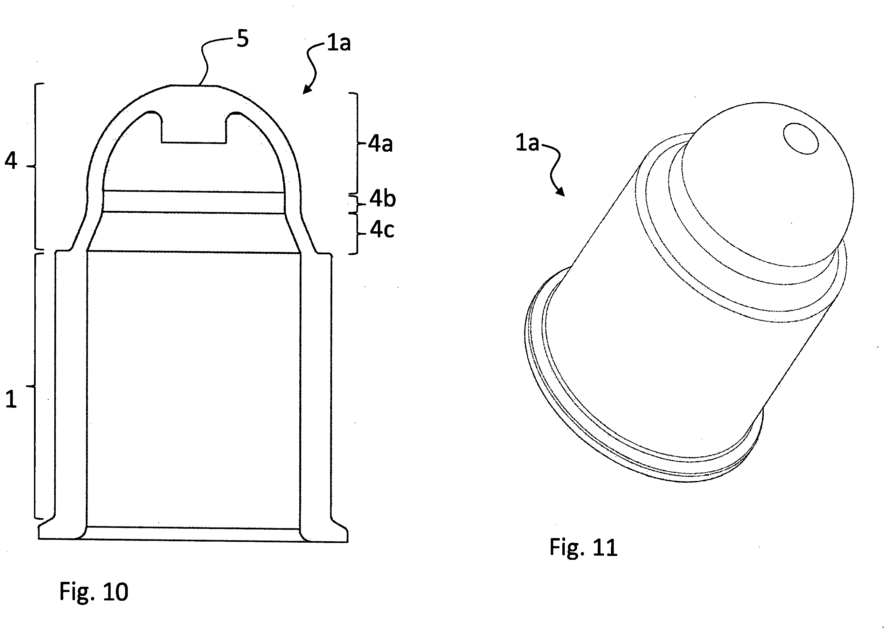

Figur 9 veranschaulicht die Konizität des konischen Bereichs 3c bzw. des dritten Axialabschnitts 4c. Da der konische Axialabschnitt 4c über seine axiale Länge gleich dick ist, d.h. die Innenwand und die Außenwand parallel verlaufen (siehe gestrichelte Linie), besitzen die Hauptströmungsrichtung, die Innenwandfläche und die Außenwandfläche des konischen Axialabschnitts 4c bzw. des entsprechenden Bereichs 3c des Angusskanals 3 denselben Halbkegelwinkel α/2 zur Formteilachse 8, der gemäß Figur 9 ca. 23.2° beträgt, so dass ein Kegelöffnungswinkel α des konischen Schirmbereichs 4a von ca. 46,4° vorliegt. Unter besagtem Halbkegelwinkel α/2 fließt die Schmelze 2 in den zweiten zylindrischen Bereich 3d des Angusses ein, oder im Falle des Fehlens eines solchen Bereichs (siehe Figuren 10, 11) direkt in die Formkavität 15 ein.

Figuren 10 und 11 zeigen ein Rohformteil 1a mit einer erfindungsgemäßen Schirmangussgeometrie, die im Wesentlichen der in den Figuren 5 bis 7 gezeigten und erläuterten Geometrie entspricht. Sie unterscheidet sich von dieser Geometrie jedoch darin, dass der vierte Axialabschnitt 4d, d.h. bezüglich des Angusskanals der vierte Bereich 3d nicht vorhanden ist. So geht der konische Axialabschnitt 4c direkt in das Formteil 1 über, d.h., dass der entsprechende konische Bereich 3c des Angusskanals 3 direkt in die Formkavität 15 mündet. Während die Ausführungsvariante der Figuren 5 bis 9 eine außen optimierte Schirmangussgeometrie besitzt, die insbesondere für eine Umspritzung im Zwei-Komponenten-Spritzgießverfahren geeignet ist, ist die Angussgeometrie gemäß Figuren 10,11 einfacher ausgestaltet und für den herkömmlichen Einkomponentenspritzguss vorgesehen.

Dadurch, dass der konische Bereich 3c direkt in die Formkavität 15 mündet, kommt es zwar hinter dem Übergang von dem Angusskanal 3 zur Formkavität 15 aus Sicht der Kunststoffformmasse 2 zu einer Hinterschneidung. Jedoch wird durch den Strömungseintritt mit dem besagtem Halbkegelwinkel α/2 in die Formkavität 15 vermieden, dass die Formmasse 2 an der Umfangsfläche des Formkerns 15 voreilt, und dadurch keinen oder einen zu geringen Kontakt mit der Kavitätsaußenwand eingeht. Denn die Strömung der Formmasse 2 wird beim winkligen Eintritt in die Kavität 15 vollumfänglich auf die Innenseite der Außenwand der Kavität 15 gerichtet. Der Kontakt zwischen der Kunststoffformmasse 2 und der Formkavitätsaußenwand kann dadurch verbessert werden. Des Weiteren wird durch den schrägen Eintritt weitgehend verhindert, dass sich die Verstärkungsfasern in der Hinterschneidung radial ausrichten, was beim Erkalten des Rohformteils 1a zu einer geringeren Schwindung in diesem Bereich führen würde als im Übrigen Rohformteil 1a. Vielmehr richten sich die Fasern vermehrt in axialer oder radial-axialer Richtung aus, so dass eine bessere Maßhaltigkeit infolge homogenerer Schwindung erzielt wird.

Als eine Besonderheit weisen der Angusskanal 3 und der entsprechende Schirmanguss 4 bei beiden Ausführungsvarianten (Fig. 5 bis 9 und 10, 11) eine Kombination ringförmiger Geometrieelemente 4a, 4b, 4c, insbesondere aus zylindrischen und konischen Elementen, auf. Durch die ein konisches Geometrieelement 3c, 4c wird eine Freistrahlbildung, d.h. ein nur einseitiges Vorbeigleiten der Kunststoffmasse 2 am Werkzeugkern 14 ohne Berührung bzw. mit unzureichender Berührung der Kavitätsaussenwand vermieden, die bei einer rein geraden Anbindung über zylindrische Schirmelemente entstehen würde. Weiterhin hat der erfindungsgemäße Schirmanguss 4 im Gegensatz zu einem tellerartigen, rein radialen Schirmanguss bzw. sogenannten Tellerangüssen den Vorteil, die angussnahe, radiale Schwindung nicht zu behindern.

Wie in den Figuren 1 bis 4 weiter zu sehen ist, weist die zweite Werkzeughälfte 12 des erfindungsgemäßen Spritzwerkzeugs 10 einen Auswerfer 17 auf, der koaxial durch den Formkern 14 hindurch geführt ist. Dessen zur Einspritzdüse 13 gerichtetes axiales Ende 18 begrenzt den Angusskanal 3 mit, wobei das axiale Ende 18 des Auswerfers 17 die Ausnehmung 16 bodenseitig begrenzt. Dies führt dazu, dass die axiale Stirnseite des Auswerfers 17 an dem nach dem Spritzgießen gebildeten Stumpf 6 und damit an der Innenseite des Schirmangusses 4 des hergestellten Spritzlings anliegt, so dass der Auswerfer 17 bei einer Relativbewegung gegenüber dem Formkern 14 eine Druckkraft auf den Stumpf 6 und damit auf den Schirmanguss 4 ausüben kann, wodurch der Spritzling axial von dem Formkern 14 herunter geschoben wird. Das hergestellte hohle Kunststoffformteil 1a wird dadurch nicht mechanisch belastet.

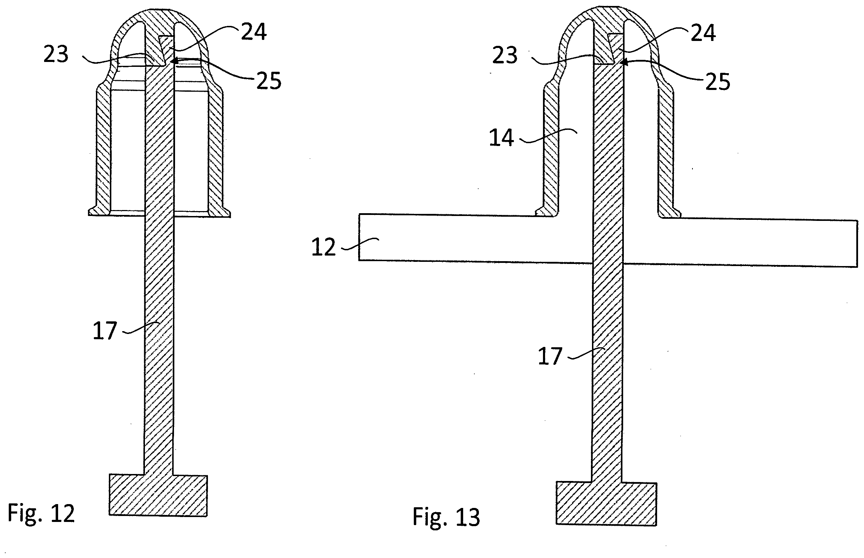

In einer anderen Ausführungsvariante, die in den Figuren 12 bis 18 gezeigt ist, siehe nachfolgend insbesondere Figur 12, besitzt das axiale Ende 18 des Auswerfers 17 eine Hinterschneidung 23. Diese wird während des Spritzgießens formschlüssig von Kunststoffformmasse 2 ausgefüllt. Durch die Hinterschneidung 23 ist die Schmelzefängergeometrie, d.h. die Tiefe der Ausnehmung 16 für einen Eingriff des Z-Auswerfers 17 verlängert.

Die Hinterschneidung 23 bewirkt, dass der Auswerfer 17 den Spritzling 1a in beide axiale Richtungen, d.h. sowohl zur Einspritzdüse 13 hin als auch von dieser weg bewegen kann. Die Hinterschneidung 23 ist dadurch gebildet, dass der Endabschnitt 18 des Auswerfers 17 im Querschnitt Z-förmig ist. Dies bedeutet, dass am axialen Ende 18 des Auswerfers 17 an einer Randseite 25 ein Zahn 24 in axialer Richtung absteht, der zur Achse des Auswerfers 17 hin derart abgeschrägt ist, dass er an seinem freien Ende breiter ist als an seiner Basis. Die Schmelzefängergeometrie ist folglich in axialer Richtung durch den die Hinterschneidung 23 bildenden Raumbereich neben dem Zahn 14 verlängert. Figur 13 zeigt den Auswerfer 17 samt zweiter Werkzeughälfte 12 und Formkern 14.

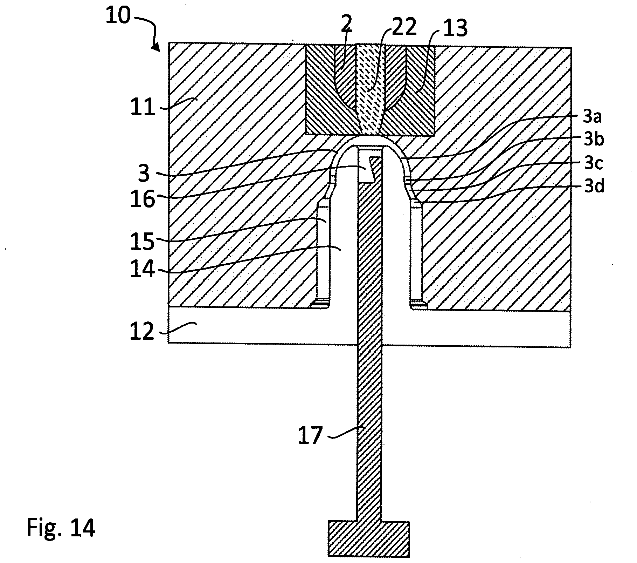

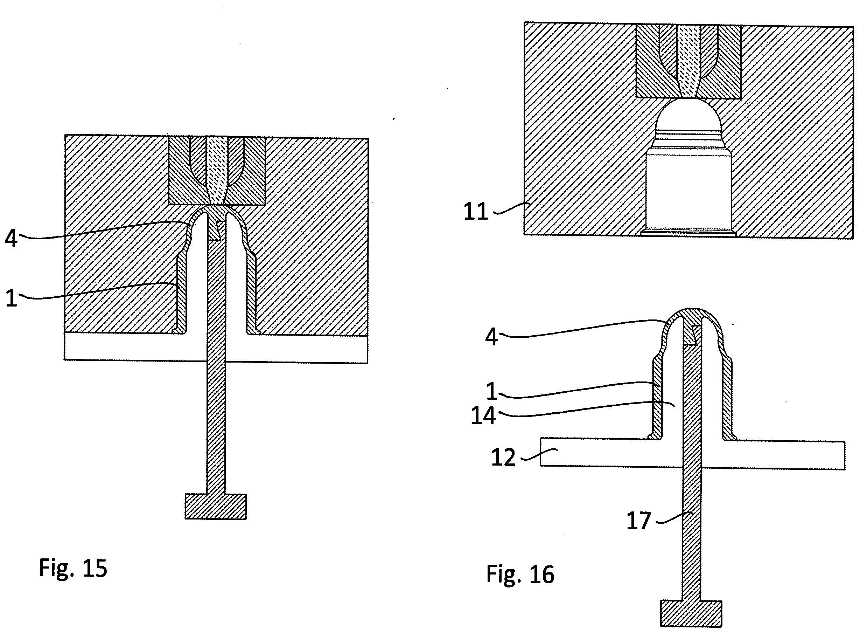

In Figur 14 ist im Vergleich zu Figur 13 auch die zweite Werkzeughälfte 11 dargestellt, wobei die Kavität 15 noch nicht gefüllt ist. Das Spritzgusswerkzeug 10 ist folglich geschlossen und steht am Anfang eines Spritzgussvorgangs. Figur 15 zeigt das Spritzgusswerkzeug 10 samt hergestelltem Spritzling 1a. In Figur 16 sind die beiden Formwerkzeughälften 11, 12 auseinander gefahren, d.h. das Formwerkzeug 10 ist geöffnet, so dass der auf dem Formkern 14 aufliegende Spritzling 1a frei zugänglich ist. Während des Öffnungsvorgangs hält der Auswerfer mit seinem Z-förmigen Ende 18 den Spritzling 1, 4 zuverlässig auf dem Werkzeugkern 14, so dass ein düsenseitiges "Hängenbleiben" des Spritzlings 1, 4 sicher vermieden wird. Dies führt wiederum zu weniger Ausschuss und vermeidet Anfahrprobleme beim Herstellungsprozess. Die Prozessstabilität wird dadurch erhöht.

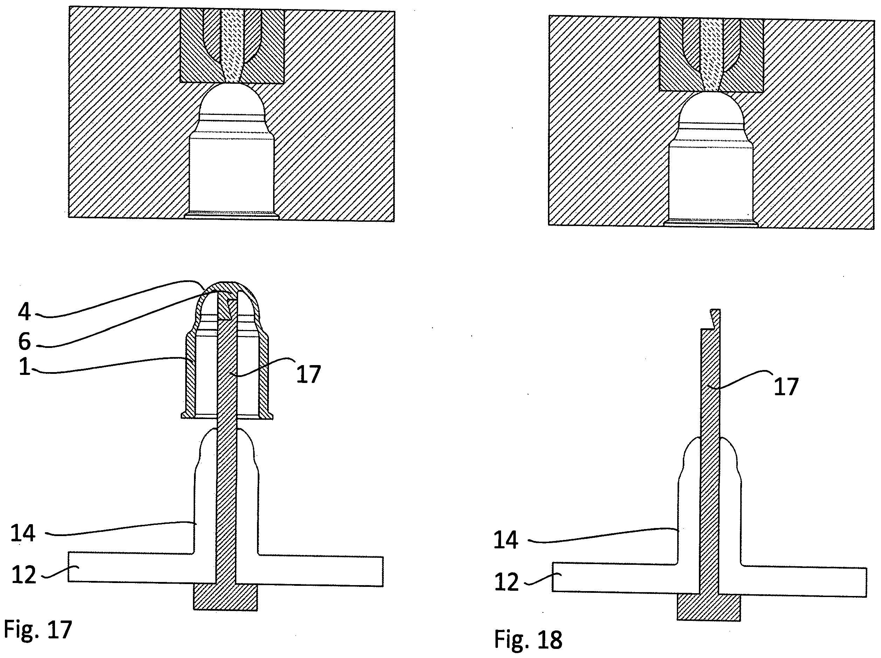

Der Auswerfer 17 wird dann zur Entformung des Spritzlings 1, 4 vom Werkzeugkern 14, ausgehend von Figur 16, koaxial in Richtung der ersten Werkzeughälfte 11 bewegt, wobei er im Formkern 14 geführt ist. Der Auswerfer 17 drückt gegen den Stumpf 6 des Schirmangusses 4. Hierdurch wird der Spritzling 1, 4 von dem Formkern 14 abgestreift. Der Kraftangriffspunkt liegt folglich am Schmelzefänger 16 bzw. am Schirmanguss 4, sodass die auf das eigentliche Formteil 1 wirkenden Entformungskräfte stark gemindert sind. Der entformte Zustand ist in Figur 17 dargestellt.

Das Rohformteil 1a wird dann von dem Auswerfer 17 abgenommen oder fällt im Falle geringer Adhäsion von diesem direkt ab, siehe Figur 18. Die beiden Werkzeughälften 11, 12 fahren dann wieder zusammen, so dass sich die Spritzgussmaschine 10 in ihrem Ausgangszustand gemäß Figur 14 befindet.

Die Figuren 19 und 20 zeigen ein Kunststoffformteil in seiner Rohform (Figur 19) und in seiner Endform (Figur 20). Das Rohformteil besteht aus dem Spritzling 1a der Figuren 5 bis 9 und einem weiteren, mittels eines 2-Komponenten-Spritzgießverfahrens über den ersten Spritzling 1a gespritzten zweiten Spritzling 7a.

Der erste Spritzling 1a umfasst das Formteil 1, das hier ein Lager zur Lagerung der Welle einer Pumpe ist, und einen Schirmanguss 4, der durch den erfindungsgemäßen Spritzgussprozess entsteht und später entfernt werden muss. Der zweite Spritzling 7a umfasst das Formteil 7, das hier ein Lagerträger für das Lager ist, und einen Schirmanguss 9, der durch den erfindungsgemäßen Spritzgussprozess entsteht und später entfernt werden muss. Dieser zweite Schirmanguss 9 ist auf den ersten Schirmanguss 4 des ersten Rohformteils 1a aufgespritzt.

Das erste Rohformteil 1a bildet für die Herstellung des Kunststoffformteils die innere Begrenzungsfläche einer Formkavität, die äußere Begrenzungsfläche ist in der ersten Werkzeughälfte des entsprechenden Formwerkzeugs ausgebildet. Der ersten und der zweite Spritzling sind vorzugsweise aus unterschiedlichen Kunststoffen hergestellt. So können das das Lager bildende Formteil beispielsweise aus einem Kunststoff mit guten tribologischen Eigenschaften, wie PEEK, das den Lagerträger bildende Formteil beispielsweise aus PPS bestehen.

In Figur 20 ist das fertige Formteil, eine einstückige Lagereinheit aus Kunststoff für eine Pumpe, insbesondere eine Nassläuferpumpe abgebildet. Die beiden Schirmangüsse 4, 9 sind entfernt. Das Formteil besteht aus dem inneren, das Gleitlager bildenden Formteil 1, und dem äußeren, den Lagerträger bildenden Formteil 7.

### Bezugszeichenliste

- 1: herzustellendes Formteil
- 1a: Rohformteil
- 2: Kunststoffmaterial
- 3: Angusskanal
- 3a: sphärischer Bereich des Angusskanals 3
- 3b: zylindrischer Bereich des Angusskanals 3
- 3c: konischer Bereich des Angusskanals 3
- 3d: zylindrischer Bereich des Angusskanals 3
- 4: Schirmanguss
- 4a: sphärischer Axialabschnitt des Schirmangusses 4
- 4b: zylindrischer Axialabschnitt des Schirmangusses 4
- 4c: konischer Axialabschnitt des Schirmangusses 4
- 4d: zylindrischer Axialabschnitt des Schirmangusses 4
- 5: zentraler Anspritzpunkt/ Düsenanlagefläche
- 6: Stumpf
- 7: zweites Formteil
- 7a: zweiter Rohformteil
- 8: Formkernachse, Formteilachse
- 9: Schirmanguss zweiter Spritzling
- 10: Spritzgusswerkzeug
- 11: erste Werkzeughälfte
- 12: zweite Werkzeughälfte
- 13: Einspritzdüse
- 14: Formkern
- 15: Formkavität
- 16: Ausnehmung im Formkern
- 17: Auswerfer
- 18: axiales Ende des Auswerfers
- 19: Schulter
- 20: Innenrundung
- 21: Düsenöffnung
- 22: Düsennadel
- 23: Hinterschneidung
- 24: Zahn
- 25: Randseite

## Patentansprüche

1. Spritzgusswerkzeug (10) zur Herstellung eines hohlen Formteils (1) aus einem faserverstärkten Kunststoffmaterial (2), zumindest umfassend eine erste Werkzeughälfte (11), die eine Einspritzdüse (13, 22) aufweist, und eine zweite Werkzeughälfte (12), die wenigstens einen Formkern (14) aufweist, wobei zwischen dem Formkern (14) und der ersten Werkzeughälfte (11) eine mit dem Kunststoffmaterial füllbare Formkavität (15) ausgebildet ist, die über einen schirmförmigen Angusskanal (3) an die Einspritzdüse (13, 22) anschließt, **dadurch gekennzeichnet, dass** der Angusskanal (3) einen sphärischen Bereich (3a) in der Art einer Halbkugelschale aufweist.

2. Spritzgusswerkzeug (10) nach Anspruch 1, **dadurch gekennzeichnet, dass** der Angusskanal (3) wenigstens zwei Bereiche (3a, 3b, 3c, 3d) unterschiedlicher Geometrie aufweist.

3. Spritzgusswerkzeug (10) nach Anspruch 1 oder 2, **dadurch gekennzeichnet, dass** der Angusskanal (3) zwischen seinem sphärischen Bereich (3a) und der Formkavität (15) einen konischen Bereich (3c) aufweist.

4. Spritzgusswerkzeug (10) nach Anspruch 3, **dadurch gekennzeichnet, dass** der konische Bereich (3c) unmittelbar in die Formkavität (15) mündet.

5. Spritzgusswerkzeug (10) nach Anspruch 3 oder 4, **dadurch gekennzeichnet, dass** der konische Bereich (3c) mit der Achse (8) des Formkerns (14) einen Winkel zwischen 20° und 40°, insbesondere 20° bis 30°, vorzugsweise zwischen 22° und 23°, bildet.

6. Spritzgusswerkzeug (10) nach einem der vorherigen Ansprüche, **dadurch gekennzeichnet, dass** der Angusskanal (3) zwischen seinem sphärischen Bereich (3a) und der Formkavität (15), insbesondere zwischen dem sphärischen Bereich und dem konischen Bereich (3c), einen zylindrischen Bereich (3d) aufweist.

7. Spritzgusswerkzeug (10) nach einem der vorherigen Ansprüche, **dadurch gekennzeichnet, dass** der Angusskanal (3) vor dem Übergang zur Formkavität (15) eine Wandstärke aufweist, die mindestens 40% der Wandstärke der Formkavität (15) hinter dem Übergang beträgt.

8. Spritzgusswerkzeug (10) nach einem der vorherigen Ansprüche, **dadurch gekennzeichnet, dass** sich der Angusskanal (3) gleichmäßig auf die Wandstärke der Formkavität (15) erweitert.

9. Spritzgusswerkzeug (10) nach einem der vorherigen Ansprüche, **dadurch gekennzeichnet, dass** der Formkern (14) gegenüber der Einspritzdüse (15) eine topfförmige, einen Freiraum bildende Ausnehmung (16) zum Schmelzefang aufweist.

10. Spritzgusswerkzeug (10) nach Anspruch 9, **dadurch gekennzeichnet, dass** der Übergangsbereich des Formkerns (14) von der Ausnehmung (16) zum sphärischen Bereich (3c) des Angusskanals (3) abgerundet ist.

11. Spritzgusswerkzeug (10) nach einem der vorherigen Ansprüche, **dadurch gekennzeichnet, dass** die zweite Werkzeughälfte (12) einen koaxial durch den Formkern (14) hindurch geführten Auswerfer (17) aufweist, dessen zur Einspritzdüse (13, 22) gerichtetes axiales Ende (18) den Angusskanal (3) mit begrenzt.

12. Spritzgusswerkzeug (10) nach Anspruch 11 rückbezogen auf Anspruch 9 oder 10, **dadurch gekennzeichnet, dass** das axiale Ende (18) des Auswerfers (17) den Freiraum zumindest bodenseitig begrenzt.

13. Spritzgusswerkzeug (10) nach Anspruch 11 oder 12, **dadurch gekennzeichnet, dass** das axiale Ende (18) des Auswerfers (17) eine Hinterschneidung (23), insbesondere eine z-förmige Querschnittsform aufweist.

14. Spritzgusswerkzeug (10) nach einem der vorherigen Ansprüche, **dadurch gekennzeichnet, dass** sich an den konischen Bereich (3c) ein im Wesentlichen zylindrischer Bereich (3d) anschließt, der mit gleicher Wandstärker wie die Formkavität (15) in diese mündet und der außen eine abgerundete Schulter (19) aufweist, wobei der Übergang vom konischen Bereich (3c) zu dem zylindrischen Bereich (3d) eine Innenrundung (20) aufweist, deren Radius gleich oder größer dem Radius der Schulter (19) ist.

15. Spritzgusswerkzeug (10) nach einem der vorherigen Ansprüche, **dadurch gekennzeichnet, dass** eine verschließbare Düsenöffnung (21) der Einspritzdüse (13, 22) direkt in den sphärischen Bereich (3a) des Angusskanals (3) mündet.

16. Spritzgusswerkzeug (10) nach Anspruch 15, **dadurch gekennzeichnet, dass** die Düsenöffnung (21) mittels einer Düsennadel (22) verschließbar ist, die im geschlossenen Zustand den späherischen Bereich (3a) des Angusskanals (3) mit begrenzt.

17. Verfahren zur Herstellung eines hohlen Formteils (1) aus einem Kunststoffmaterial (2), das mittels einer Einspritzdüse (13) über einen schirmförmigen Angusskanal (3) unter Ausbildung eines Schirmangusses (4) in eine Formkavität (15) eingespritzt wird, **dadurch gekennzeichnet, dass** das Kunststoffmaterial (2) zunächst durch einen in der Art einer Halbkugelschale sphärischen Bereich (3a) des Angusskanals (3) strömt und anschließend in die Formkavität (15) eintritt.

18. Verfahren nach Anspruch 17, **dadurch gekennzeichnet, dass** das Kunststoffmaterial (2) nach dem sphärischen Bereich (3a) durch einen konischen Bereich (3c) des Angusskanals (3) in die Formkavität (15) fließt.

19. Verfahren nach Anspruch 17 oder 18, **dadurch gekennzeichnet, dass** das Kunststoffmaterial (2) nach dem sphärischen Bereich (3a) durch einen zylindrischen Bereich (3b) und danach durch einen konischen Bereich (3c) des Angusskanals (3) in die Formkavität (15) fließt.

20. Verfahren nach einem der Ansprüche 17 bis 19, **dadurch gekennzeichnet, dass** zum Auswerfen des hergestellten Formteils (1) ein Auswerfer (17) koaxial zum Formkern (14) bewegt wird, der gegen den kunststoffgefüllten Angusskanal (3), insbesondere gegen die Kunststofffüllung einer der Einspritzdüse (13) gegenüber liegende Ausnehmung (16) im Formkern (14) drückt und das Formteil (1) von dem Formkern (14) schiebt.

21. Verfahren nach einem der Ansprüche 17 bis 20, **dadurch gekennzeichnet, dass** auf den Schirmanguss (4) ein weiteres Kunststoffmaterial zur Ausbildung eines weiteren Schirmangusses gespritzt wird.

## Claims

1. Injection moulding tool (10) for producing a hollow moulded part (1) from a fibre-reinforced plastic material (2), at least comprising a first tool half (11), which has an injection nozzle (13, 22), and a second tool half (12), which has at least one mould core (14), wherein a mould cavity (15) fillable with the plastic material is formed between the mould core (14) and the first tool half (11) and is connected to the injection nozzle (13, 22) via an umbrella-shaped sprue channel (3), **characterized in that** the sprue channel (3) has a spherical region (3a) in the manner of a hemispherical shell.

2. Injection moulding tool (10) according to claim 1, **characterized in that** the sprue channel (3) has at least two regions (3a, 3b, 3c, 3d) of different geometry.

3. Injection moulding tool (10) according to claim 1 or 2, **characterized in that** the sprue channel (3) has a conical region (3c) between its spherical region (3a) and the mould cavity (15).

4. Injection mould tool (10) according to claim 3, **characterized in that** the conical region (3c) opens directly into the mould cavity (15).

5. Injection mould tool (10) according to claim 3 or 4, **characterized in that** the conical region (3c) forms an angle between 20° and 40°, in particular 20° to 30°, preferably between 22° and 23°, with the axis (8) of the mould core (14).

6. Injection mould tool (10) according to one of the preceding claims, **characterized in that** the sprue channel (3) between its spherical region (3a) and the mould cavity (15), in particular between the spherical region and the conical region (3c), has a cylindrical region (3d).

7. Injection mould tool (10) according to one of the previous claims, **characterized in that** the sprue channel (3), before the transition to the mould cavity (15), has a wall thickness which is at least 40% of the wall thickness of the mould cavity (15) behind the transition.

8. Injection mold tool (10) according to one of the previous claims, **characterized in that** the sprue channel (3) opens uniformly to the wall thickness of the mold cavity (15).

9. Injection moulding tool (10) according to one of the previous claims, **characterized in that** the mould core (14) has a pot-shaped recess (16), forming a free space, opposite the injection nozzle (15) for catching the melt.

10. Injection mould tool (10) according to claim 9, **characterized in that** the transition region of the mould core (14) from the recess (16) to the spherical region (3c) of the sprue channel (3) is rounded.

11. Injection mould tool (10) according to one of the preceding claims, **characterized in that** the second tool half (12) has an ejector (17) which is guided coaxially through the mould core (14) and whose axial end (18) directed towards the injection nozzle (13, 22) also delimits the sprue channel (3).

12. Injection mould (10) according to claim 11 referring back to claim 9 or 10, **characterized in that** the axial end (18) of the ejector (17) limits the free space at least on the bottom side.

13. Injection mould (10) according to claim 11 or 12, **characterized in that** the axial end (18) of the ejector (17) has an undercut (23), in particular a z-shaped cross-sectional shape.

14. Injection moulding tool (10) according to one of the preceding claims, **characterized in that** the conical region (3c) is adjoined by a substantially cylindrical region (3d) which opens into the mould cavity (15) with the same wall thickness as the latter and which has a rounded shoulder (19) on the outside, the transition from the conical region (3c) to the cylindrical region (3d) having an inner rounding (20) whose radius is equal to or greater than the radius of the shoulder (19).

15. Injection mould (10) according to one of the preceding claims, **characterized in that** a closable nozzle opening (21) of the injection nozzle (13, 22) opens directly into the spherical region (3a) of the sprue channel (3).

16. Injection moulding tool (10) according to claim 15, **characterized in that** the nozzle opening (21) can be closed by means of a nozzle needle (22) which, in the closed state, also delimits the spherical region (3a) of the sprue channel (3).

17. Method for producing a hollow moulded part (1) from a plastic material (2) which is injected by means of an injection nozzle (13) into a mould cavity (15) via an umbrella-shaped sprue channel (3), forming an umbrella sprue (4), **characterized in that** the plastic material (2) first flows through a spherical region (3a) of the sprue channel (3) in the manner of a hemispherical shell and then enters the mould cavity (15).

18. Method according to claim 17, **characterized in that** the plastic material (2) flows after the spherical region (3a) through a conical region (3c) of the sprue channel (3) into the mould cavity (15).

19. A method according to claim 17 or 18, **characterized in that** the plastic material (2) flows after the spherical region (3a) through a cylindrical region (3b) and thereafter through a conical region (3c) of the sprue channel (3) into the mold cavity (15).

20. Method according to one of the claims 17 to 19, **characterized in that**, in order to eject the produced moulded part (1), an ejector (17) is moved coaxially with the mould core (14), which ejector presses against the plastic-filled sprue channel (3), in particular against the plastic filling of a recess (16) in the mould core (14) opposite the injection nozzle (13), and pushes the moulded part (1) away from the mould core (14).

21. Method according to one of claims 17 to 20, **characterized in that** a further plastic material is injected onto the umbrella sprue (4) to form a further umbrella sprue.

## Revendications

1. Outil de moulage par injection (10) pour la fabrication d'une pièce moulée creuse (1) à partir d'une matière plastique renforcée de fibres (2), comprenant au moins une première moitié de moule (11) qui présente une buse d'injection (13, 22) et une seconde moitié de moule (12) qui présente au moins un noyau de moule (14), dans laquelle une cavité de moule (15) pouvant être remplie avec la matière plastique est formée entre le noyau de moule (14) et la première moitié de moule (11) et est reliée à la buse d'injection (13, 22) par un canal de coulée (3) en forme de parapluie, **caractérisée en ce que** le canal de coulée (3) présente une région sphérique (3a) en forme de coque hémisphérique.

2. Outil de moulage par injection (10) selon la revendication 1, **caractérisé en ce que** le canal de coulée (3) présente au moins deux régions (3a, 3b, 3c, 3d) de géométrie différente.

3. Outil de moulage par injection (10) selon la revendication 1 ou 2, **caractérisé en ce que** le canal de coulée (3) présente une région conique (3c) entre sa région sphérique (3a) et la cavité du moule (15).

4. Outil de moulage par injection (10) selon la revendication 3, **caractérisé en ce que** la région conique (3c) s'ouvre directement dans la cavité du moule (15).

5. Outil de moulage par injection (10) selon la revendication 3 ou 4, **caractérisé en ce que** la région conique (3c) forme avec l'axe (8) du noyau de moule (14) un angle compris entre 20° et 40°, notamment entre 20° et 30°, de préférence entre 22° et 23°.

6. Outil de moulage par injection (10) selon l'une des revendications précédentes, **caractérisé en ce que** le canal de coulée (3) entre sa région sphérique (3a) et la cavité du moule (15), en particulier entre la région sphérique et la région conique (3c), présente une région cylindrique (3d).

7. Outil de moulage par injection (10) selon l'une des revendications précédentes, **caractérisé en ce que** le canal de coulée (3) avant la transition vers la cavité de moule (15) a une épaisseur de paroi qui est d'au moins 40% de l'épaisseur de paroi de la cavité de moule (15) derrière la transition.

8. Outil de moulage par injection (10) selon l'une des revendications précédentes, **caractérisé en ce que** le canal de coulée (3) s'élargir uniformément jusqu'à l'épaisseur de paroi de la cavité du moule (15).

9. Outil de moulage par injection (10) selon l'une des revendications précédentes, **caractérisé en ce que** le noyau de moule (14) présente un évidement en forme de pot (16) par rapport à la buse d'injection (15), qui forme un espace libre pour recevoir la masse fondue.

10. Outil de moulage par injection (10) selon la revendication 9, **caractérisé en ce que** la région de transition du noyau de moule (14) de l'évidement (16) à la région sphérique (3c) de le canal de coulée (3) est arrondie.

11. Outil de moulage par injection (10) selon l'une des revendications précédentes, **caractérisé en ce que** la deuxième moitié de moule (12) présente un éjecteur (17) qui est guidé coaxialement à travers le noyau de moule (14) et dont l'extrémité axiale (18), dirigée vers la buse d'injection (13, 22), limite également la canal de coulée (3).

12. Outil de moulage par injection (10) selon la revendication 11 par rapport à la revendication 9 ou 10, **caractérisé en ce que** l'extrémité axiale (18) de l'éjecteur (17) limite l'espace libre au moins sur la face inférieure.

13. Outil de moulage par injection (10) selon la revendication 11 ou 12, **caractérisé en ce que** l'extrémité axiale (18) de l'éjecteur (17) présente une contre-dépouille (23), en particulier une section en forme de Z.

14. Outil de moulage par injection (10) selon l'une des revendications précédentes, **caractérisé en ce que** la région conique (3c) est suivie d'une région essentiellement cylindrique (3d) qui s'ouvre dans la cavité du moule (15) avec la même épaisseur de paroi que celle-ci et qui présente à l'extérieur un épaulement arrondi (19), la transition entre la région conique (3c) et la région cylindrique (3d) ayant un arrondissement interne (20) dont le rayon est supérieur ou égal au rayon de l'épaulement (19).

15. Outil de moulage par injection (10) selon l'une des revendications précédentes, **caractérisé en ce qu'**une ouverture de buse (21) obturable de la buse d'injection (13, 22) s'ouvre directement dans la région sphérique (3a) du canal de coulée (3).

16. Outil de moulage par injection (10) selon la revendication 15, **caractérisé en ce que** l'ouverture de buse (21) peut être fermée au moyen d'une aiguille de buse (22) qui, à l'état fermé, délimite également la région sphérique (3a) du canal de coulée (3).

17. Procédé de fabrication d'une pièce moulée creuse (1) à partir d'une matière plastique (2) qui est injectée dans une cavité de moule (15) au moyen d'une buse d'injection (13) par un canal de coulée (3) en forme de parapluie, formant une coulée de parapluie (4), **caractérisé en ce que** la matière plastique (2) traverse d'abord une région sphérique (3a) du canal de coulée (3) à la manière d'une coque hémisphérique et puis s'introduit dans la cavité du moule (15).

18. Procédé selon la revendication 17, **caractérisé en ce que** la matière plastique (2) s'écoule après la région sphérique (3a) à travers une région conique (3c) du canal de coulée (3) dans la cavité du moule (15).

19. Procédé selon la revendication 17 ou 18, **caractérisé en ce que** la matière plastique (2) s'écoule après la région sphérique (3a) à travers une région cylindrique (3b) et ensuite à travers une région conique (3c) du canal de coulée (3) dans la cavité du moule (15).

20. Procédé selon l'une des revendications 17 à 19, **caractérisé en ce que**, pour éjecter la pièce moulée (1) produite, un éjecteur (17) est déplacé coaxialement au noyau de moule (14), lequel éjecteur appuie contre le canal de coulée (3) remplie de matière plastique, en particulier contre le remplissage plastique d'un évidement (16) du noyau de moule (14) opposé à la buse (13), et pousse la pièce moulée (1) loin du noyau (14).

21. Procédé selon l'une des revendications 17 à 20, **caractérisé en ce qu'**une autre matière plastique est injectée sur la coulée de parapluie (4) pour former une autre coulée de parapluie.
